**Europäisches Patentamt**

**European Patent Office**

**Office européen des brevets**

(19)

(11) Veröffentlichungsnummer: **0 119 211**
**B1**

(12) # EUROPÄISCHE PATENTSCHRIFT

(45) Veröffentlichungstag der Patentschrift:
**20.11.86**

(51) Int. Cl.⁴: **F 16 H 25/18**

(21) Anmeldenummer: **83902743.0**

(22) Anmeldetag: **05.09.83**

(86) Internationale Anmeldenummer:
**PCT/CH 83/00101**

(87) Internationale Veröffentlichungsnummer:
**WO 84/01199 (29.03.84** Gazette 84/9)

(54) **DRUCKMITTELBETRIEBENE ANTRIEBSVORRICHTUNG.**

(30) Priorität: **17.09.82 CH 5500/82**

(43) Veröffentlichungstag der Anmeldung:
**26.09.84 Patentblatt 84/39**

(45) Bekanntmachung des Hinweises auf die Patenterteilung:
**20.11.86 Patentblatt 86/47**

(84) Benannte Vertragsstaaten:
**AT BE CH DE FR GB LI LU NL SE**

(56) Entgegenhaltungen:
**DE - B - 1 295 301**
**DE - C - 569 894**
**FR - A - 2 092 367**
**FR - A - 2 104 756**
**GB - A - 1 005 616**
**GB - A - 1 353 126**

(73) Patentinhaber: **HIRMANN, Georg, Griesernweg 14,
CH-8037 Zürich (CH)**

(72) Erfinder: **HIRMANN, Georg, Griesernweg 14,
CH-8037 Zürich (CH)**

(74) Vertreter: **Troesch, Hans Alfred, Dr. Ing. et al,
Walchestrasse 19, CH-8035 Zürich (CH)**

## Beschreibung

Die vorliegende Erfindung betrifft eine druckmittelbetriebene Antriebsvorrichtung zur Erzeugung einer Relativbewegung in Form einer fortschreitenden, geradlinigen, ebenen oder räumlichen Schwenk- bzw. Drehbewegung eines angetriebenen Elementes mittels mindestens eines Hubelementes.

### Stand der Technik

Es ist eine druckmediumbetriebene Linear-Antriebsvorrichtung zur Erzeugung einer Relativverschiebung zwischen einer schlittenförmigen Antriebseinheit und einer Kurvenprofil-Schubleiste bekannt. Dabei weist die Antriebseinheit eine Mehrzahl vom Druckmedium betätigbare, Schrittelemente bildende Kolben-Zylinder-Systeme auf, deren Kolben sich am Profil der Schubleiste abstützen und deren Zylinder je über Steuerventilmittel mit der Druckmediumsquelle verbunden sind, wobei die Schrittelemente je mit einerseits an den Kolben der Schrittelemente, andererseits am Schlittengehäuse angelenkten Hebelmitteln sich selbst zentrierende Schubgelenkantriebselemente bilden (GB-PS 1 353 126).

Diese Vorrichtung kann nur Anwendung finden, wenn der angetriebene Gegenstand eine formschlüssige Verbindung mit dem Antrieb erlaubt. Dies stellt eine sehr einschränkende und kostspielige Bedingung für die äussere Form dieses Gegenstandes dar.

### Darstellung der Erfindung

Die vorliegende Erfindung bezweckt die Schaffung einer Antriebsvorrichtung, welche dieser Einschränkung nicht bedarf und eine kraftschlüssige Verbindung ermöglicht.

Die erfindungsgemässe druckmittelbetriebene Antriebsvorrichtung zeichnet sich dadurch aus, dass zwischen dem Hubelement und dem angetriebenen Element mindestens ein Teilglied angeordnet ist, welches unter dem Einfluss der Hubbewegungen des als aufblasbare Zelle ausgebildeten Hubelementes aufgrund einer durch Keilwirkung erzeugten Kraftkomponente und einer Rückstellkraft in der Bahn der Relativbewegung eine schrittweise hin- und hergehende Bewegung ausführt, wobei eine Vorbewegung des angetriebenen Elementes während des Arbeitshubs der Zelle dadurch erfolgt, dass das Keilglied beim Arbeitshub der Hubeinrichtung unter Reibschluss Kraft überträgt und beim Rückhub der Zelle unter Aufhebung des Reibschlusses eine relative Rückbewegung des Keilgliedes infolge der Rückstellkraft erfolgt.

### Kurze Beschreibung der Zeichnungen

Der Erfindungsgegenstand wird anschliessend anhand von Figuren erläutert.

Es zeigen:

Fig. 1 eine Antriebsvorrichtung mit simultan aufblasbaren, balgartigen Kraftzellen für Kurzhub,

Fig. 2 eine Druckplatte mit einer Öffnung für die Aufnahme einer Rolle für die Vorrichtung nach Fig. 1,

Fig. 3 die Druckplatte mit montierter Druckrolle von oben,

Fig. 4 ein Antriebselement mit bügelförmigem Ansatz,

Fig. 5 den Antrieb eines keilförmigen Teiles,

Fig. 6 einen Schubantrieb für kontinuierlichen Vorschub,

Fig. 7 einen Doppelkeil für einen Keilschubantrieb,

Fig. 8 einen Kurvenscheibenantrieb,

Fig. 9 einen Keilschubantrieb zur Erzeugung eines Drehmomentes,

Fig. 10 ein Antriebselement mit Führungsstiften,

Fig. 11 eine Planar-Anordnung von mehreren Antriebselementen,

Fig. 12 eine quaderförmige Kraftzelle,

Fig. 13 die interne Führung einer membranen- oder balgartigen Kraftzelle,

Fig. 14 eine zur Keilebene parallelliegende Zelle mit Nadellagerung, im Längsschnitt,

Fig. 15 eine Antriebsvorrichtung mit zangenartig angeordneten Klemmteilen.

### Beschreibung der Einzelfiguren

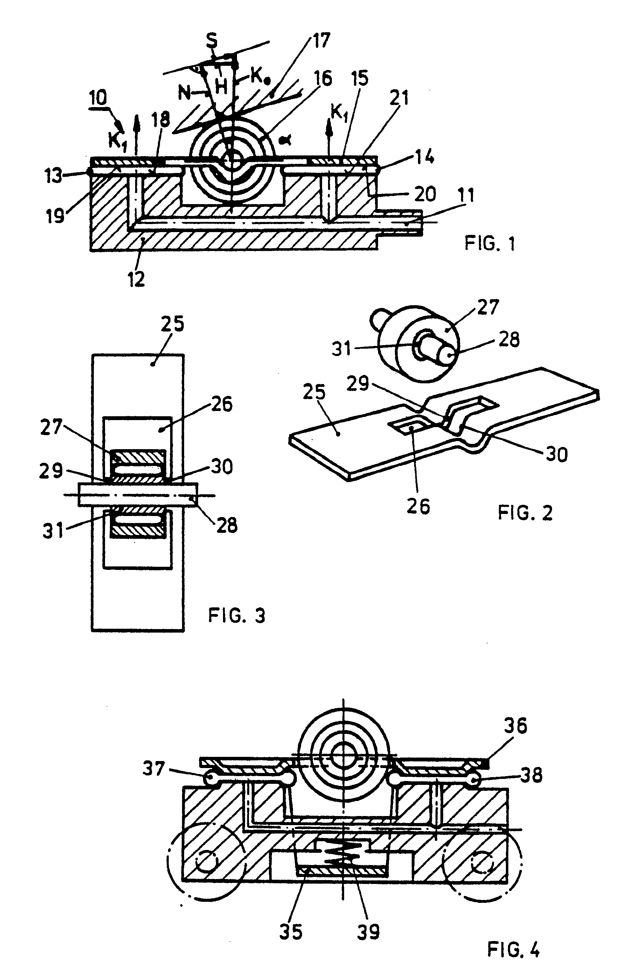

Fig. 1 zeigt eine Antriebseinheit 10 mit durch eine Leitung 11 in einem Basisteil 12 simultan aufblasbaren balgartigen Kraftzellen 13, 14 und einer auf diesen abgestützte Platte 15. Eine reibungsarm, z.B. Kugellager-Rollenflachlager gelagerte Kurvenrolle 16 überträgt Kraft der über die Leitung 11 mit pneumatischem oder hydraulischem Druckmedium gefüllten Kraftzellen auf einen angetriebenen Zwischenteil 17, z.B. ein Keil. Das Zusammenhalten der einzelnen Teile kann bei kleinen Dimensionen durch doppelseitig klebende Folien an den stets abgeflacht bleibenden Berührungsflächen 18, 19, 20, 21 der Kraftzellen erfolgen. Wenn die beiden Kraftzellen 13 und 14 über die Leitung 11 mit einem Druckmedium, z.B. Druckluft, gespiesen werden, üben die Zellen je eine Kraft $\kappa_1$ auf die Platte 15 aus. Dies ergibt in der Achse 28 eine angreifende Resultierende $\kappa_0 = 2 \cdot \kappa_1$.

Beträgt die Neigung der Fläche des Teiles 17 an der Auflagestelle der Kurvenrolle 16 zur Horizontalen $\alpha°$, und wird $\kappa_0$ in die beiden Komponenten N und S zerlegt, so ist $N = \kappa_0 \cdot \cos \alpha$; $S = \kappa_0 \cdot \sin \alpha$.

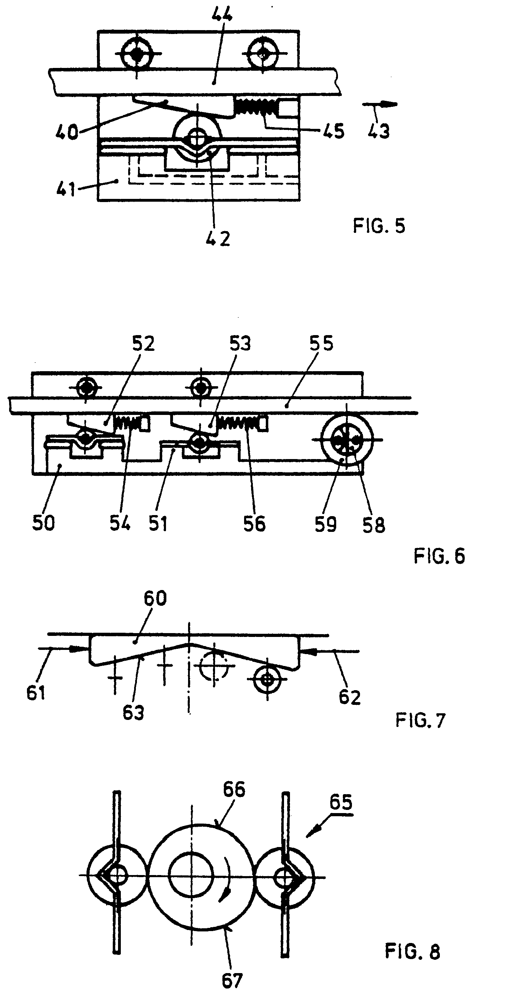

Da der Teil 17 analog mit dem Keil 40 in Fig. 5 auf einer Horizontalebene gleitet, wird für dessen Verschiebung nur die Komponente H wirksam.

$$\text{Es ist } H = S \cdot \cos \alpha = \kappa_0 \cdot \sin \alpha \cdot \cos \alpha = \frac{\kappa_0}{2} \cdot \sin 2\alpha.$$

Durch eine tiefe Lagerung der Kurvenrolle 16, d.h. geringem Abstand von der Auflageebene der beiden Kraftzellen 13, 14 wird ein Kippen der Platte 15 verhütet.

Die Fig. 2 und 3 zeigen Details einer Platte 25 mit einer Öffnung 26 für eine Rolle 27, in Form eines Rollenlagers, welche hier eine bereits eingepasste und beidseitig vorstehende Achse 28 trägt. Auf ein geringes Untermass verengte Stellen 29, 30 der Plattenöffnung bewirken das Klemmen eines Rolleninnenringes 31, wodurch Platte und Rolle nach dem Zusammenfügen eine Einheit bilden. Die dargestellte Ausführung zeigt die Möglichkeit, mit welch geringem Aufwand bei kleinen Dimensionen — z.B. für Stell- und Steuerbewegungen — solche Antriebselemente hergestellt werden können.

Fig. 4 zeigt eine Ausführungsvariante des Antriebselementes ähnlich der Ausführung gemäss Fig. 1, mit einem bügelförmigen Ansatz 35, einer Druckplatte 36, welche es ermöglicht, eine gegen zwei Kraftzellen 37, 38 wirkende Feder 39 für die Rückstellung einzubauen. Es ist ebenfalls möglich, auf ähnliche Art eine Kraftzelle für Rückstellung, einen Signalgeber für die Rückmeldung der Hubbewegung oder eine Steuereinrichtung zur Folgesteuerung von anderen Antriebselementen vorzusehen. Ferner sind zwei Rollen angedeutet, welche das Abstützen der Reaktionskräfte oder auch eine selbstfahrende Ausführung ermöglichen.

Fig. 5 zeigt den Antrieb eines Keiles 40, betätigt durch ein Antriebselement 41. Durch die Anpresskraft einer Rolle 42 entsteht am Keil 40 eine, dessen Neigung entsprechende Schubkraft 43. Die Grösse dieser Kraft ist bezüglich Fig. 1 berechnet. Durch die haftende Auflage bzw. den Kraftschluss des Keiles 40 an einer Schubstange 44 wird die gleiche Schubkraft auf die Schubstange übertragen und diese dem Hub der Rolle und dem Keilwinkel entsprechend, verschoben. Bei der Entspannung der beiden Kraftzellen wird der Keil 40 durch eine Feder 45 in die der Richtung 43 entgegengesetzte Richtung in seine Ausgangslage zurückgeführt. Eine solche Einrichtung kann eine Schubstange mit glatter Oberfläche über Reibungsschluss des Keiles schrittweise verschieben oder sich an einer feststehenden, geraden oder eben bzw. räumlich gekrümmten Stange fortbewegen.

Fig. 6 zeigt einen der Fig. 5 änlichen Schubantrieb für einen kontinuierlichen Vorschub. Zwei Antriebselemente 50 und 51 sind mit je einem angebauten und verschiebbaren Keil 52 bzw. 53 versehen. Diese beiden Keile haften während der Betätigungszeit der einzelnen Antriebselemente an der Oberfläche der Schubstange 55 durch Kraftschluss und verschieben diese abwechselnd. In den Entspannungsphasen werden die Keile 52 bzw. 53 durch Federn 54 und 56 in ihre Ausgangslagen zurückgeschoben. Diese Vorschubelemente mit dem bewegten Keil können durch abwechselnde pneumatische Einzelimpulse oder über Ventile gesteuert werden. Eine kontinuierliche Steuerung ermöglicht beispielsweise eine Drehschiebersteuerung 57, angetrieben von einem Reibrad 59, wie dies schematisch angedeutet ist.

Fig. 7 zeigt einen Keil 60 eines Keilschubantriebes analog demjenigen gemäss den Fig. 5 oder 6, jedoch für umstellbare Schubrichtungen 61, 62. Dies kann durch die Umstellung einer bistabilen Federung erfolgen (nicht dargestellt). Der grösstmögliche Winkel der Keilfläche 63, welche eben oder gebogen sein kann, wird durch die Grösse des Reibungskoeffizienten zwischen Schubstange und Keilauflagefläche bestimmt, zu dessen Erhöhung notwendigerweise ein Reibbelag üblicher Art verwendet werden kann.

Alle vorgehend dargestellten Antriebselemente können für geradlinige und ebene oder räumliche Schwenk- und Drehantriebe verwendet werden. Die Impulsbetätigung der Antriebselemente ermöglicht einen Schrittantrieb. Alle diese Bewegungen sind als Relativbewegungen zu betrachten.

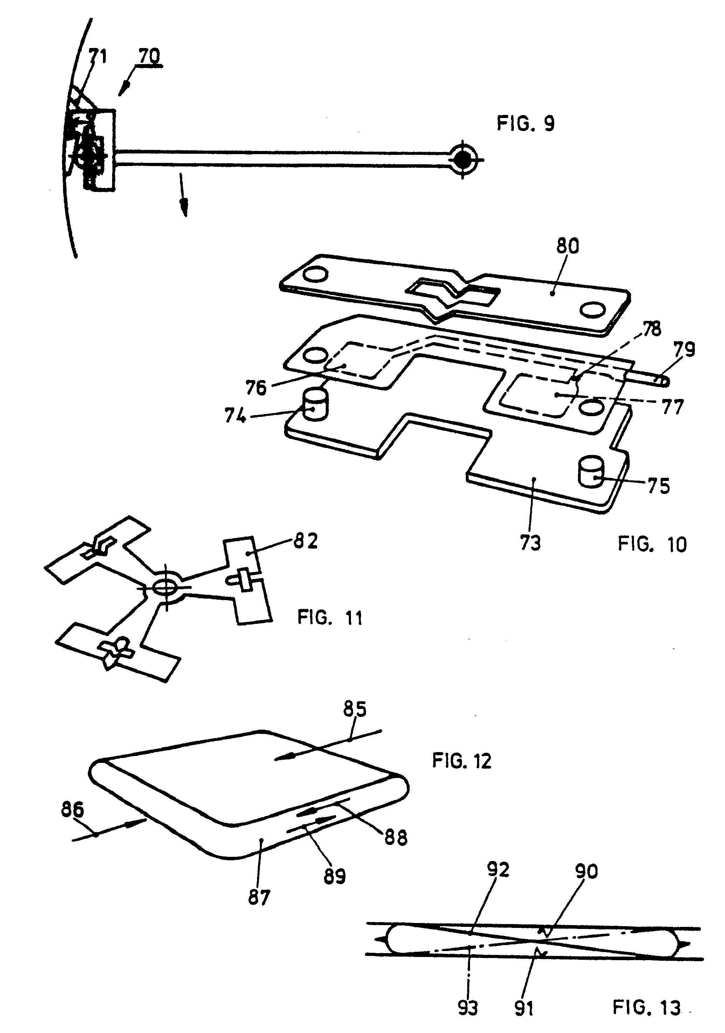

Fig. 8 zeigt in schematischer Darstellung einen Kurvenscheibenantrieb 65 für eine kontinuierliche Drehung in einer Drehrichtung mit einer Antriebskurve 66 > 180° und einer Rücklaufkurve 67 < 180°. Eine solche ungleiche Teilung der Kurventeile, welche eine kontinuierliche Drehung ermöglicht, kann auch mehrfach angewendet werden, wodurch sich die Drehzahl bzw. Schrittzahl pro Umdrehung ändert.

Fig. 9 zeigt einen Keilschubantrieb 70, ähnlich demjenigen der Fig. 5, 6 oder 7, zur Erzeugung eines Drehmomentes, beispielsweise für den Antrieb von Bahn-Drehscheiben oder bei Rührwerken in Kläranlagen. Eine Sperrklinke 71 verhindert eine Rückbewegung.

Fig. 10 zeigt ein Antriebselement, mit einem, beispielsweise aus Blech gepressten Basisteil 73, der mit Führungsstiften 74 und 75 versehen ist. An diesen wird ein, beispielsweise vulkanisierter oder hochfrequenzgeschweisster, Kraftzellenteil mit zwei Kraftzellen 76, 77, Zuführkanälen 78, einem Anschluss 79 sowie einem Druckplattenteil 80 geführt.

Für eine ebene Anordnung von mehreren Antriebselementen zum Antrieb von axial angeordneten Kurvenbahnen, können die Funktionsteile der Funktionsebenen, wie Basisteil, Kraftzellen und Druckplatten zusammengefasst werden. Beispiel einer Mehrfachdruckplatte 82 mit radialen und möglicherweise auch federnden Verbindungen zeigt Fig. 11.

Damit sowohl die Tangentialkräfte als auch die Schubkräfte einen Antrieb grundsätzlich nur von der Kraftzelle selbst übernommen werden, wählt man für die Kraftzelle (Fig. 12) mit Vorteil eine Membranen- oder Balgform, welche zur Richtung der Schubkräfte 85 und 86 parallelliegende und mindestens annähernd zylindrische Seitenwände 87 aufweist. Solche Eigenschaften haben beispielsweise Kraftzellen mit rechteckiger Form, welche die an den Befestigungsflächen entstehenden Schubkräfte 85, 86 als Schubspannung 88, 89 in der Folienwand aufnehmen.

Insofern eine ausreichende Dimensionierung der Folienwand für eine solche Selbstführung nicht möglich ist oder auch im drucklosen Zustand eine Führung erforderlich ist, müssen externe Führungsteile, beispielsweise Kulisse oder eine andere Führungsart, vorgesehen werden.

Die interne Führung einer membranen- oder balgartigen Kraftzelle, wie beispielsweise Fig. 13 zeigt, kann durch eine zwischen den haftenden Wänden 90 und 91 diagonal befestigte, federnde oder gelenkige Verbindung 92 aus ähnlichem oder etwas elastischerem Material ausgebildet werden. Bei ausreichender Dehnbarkeit des diagonalen Verbindungsteiles und bei verhältnismässig geringer Hubhöhe, z.B. 1/10 der schmäleren Seite, kann auch ein in der entgegengesetzten Richtung wirkender Verbindungsteil 93 zusätzlich eingebaut werden. Es ist ebenfalls möglich, mechanische Führungsteile 13, wie einen Zentrierbolzen, in die Kraftzelle einzubauen.

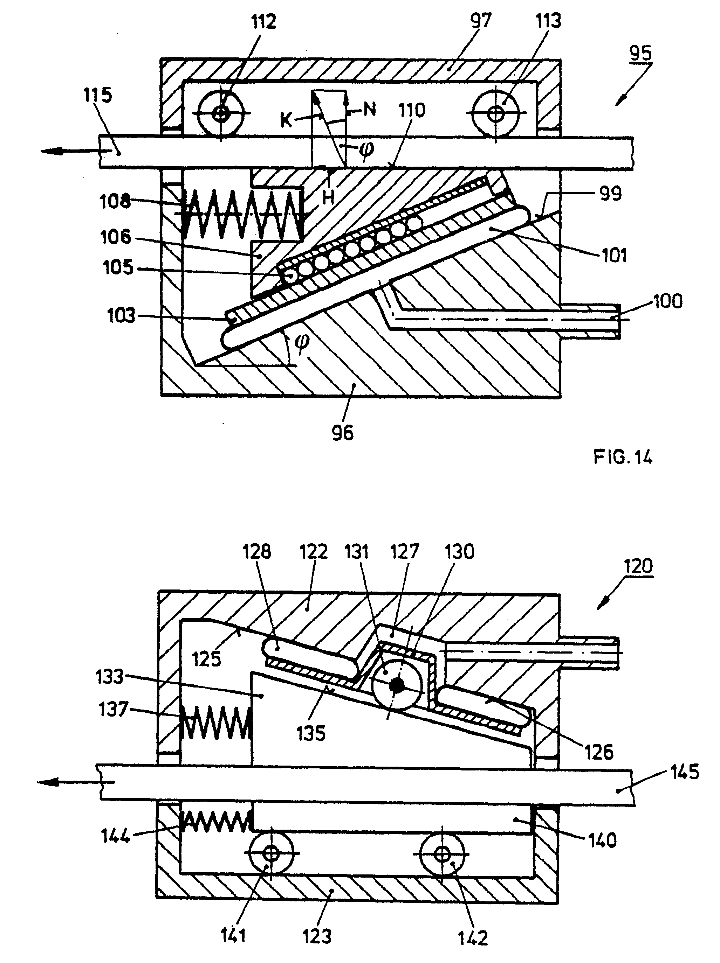

Fig. 14 zeigt in schematischer Darstellung einen Längsschnitt durch eine Antriebsvorrichtung 95. Diese weist ein Gehäuse 96 mit einem Deckel 97 auf, wobei das Gehäuse 96 eine innere, schräge Auflage 99 hat, auf der eine Kraftzelle 101, z.B. durch Kleben, befestigt ist. Über einen Druckluftanschluss 100 wird der Kraftzelle 101 das Arbeitsmedium zugeführt. Auf der Kraftzelle 101 lagert eine Platte 103, welche den Aussenteil eines Flachnadelkäfiglagers 105 bildet, welches Lager 105 im übrigen in einem Schiebekeil 106, wie ersichtlich, untergebracht ist. Der Schiebekeil 109 ist mit einer Rückstellfeder 108 versehen und mit einer Verschiebefläche 110, welche eine entsprechende «Rauhigkeit» bzw. Haftfähigkeit aufweist, um kraftschlüssig den zu fördernden Gegenstand, im vorliegenden Falle eine Stange 115 bzw. bei entsprechender Querausdehnung eine Platte, zu erfassen. Gegenüber der Haftfläche bzw. Verschiebefläche 110 befinden sich zwei Rollen 112 und 113, welche drehbar im Deckel 79 gelagert sind.

Wenn die Kraftzelle 101 mit Druckluft durch den Anschluss 100 versorgt wird, übt sie auf den Schiebekeil 106 eine zu dessen Schrägfläche senkrecht verlaufende Kraft $\kappa$ aus, deren Komponente $H = \kappa \cdot \sin \varphi$ den Schiebekeil 106 in Fig. 14 nach links verschiebt und durch die Normalkomponente $N = \kappa \cdot \cos \varphi$ kraftschlüssig die Stange bzw. Platte 115 erfasst. Durch diese Schiebebewegung wird die Stange 115 schrittweise nach links bewegt, da nach dem Druckloswerden der Kraftzelle 101 die Rückstellfeder 108 den Schiebekeil 106 in seine rechte Ausgangslage zurückschiebt.

Wenn mehrere derartige Antriebsvorrichtungen 95 hintereinander geschaltet werden, so ist mit entsprechender Steuerung ein kontinuierliches Verschieben der Stange bzw. der Platte 115 möglich.

Fig. 15 zeigt eine etwas andere Ausführung einer Antriebsvorrichtung 120 in der Darstellung analog Fig. 14. Auf einem Gehäuse 122 sitzt ein Deckel 123. Das Gehäuse 122 hat eine innere Schrägfläche 125, 126 sowie eine Vertiefung 127. Die Kraftzelle 128 weist eine dieser Vertiefung entsprechende Ausnehmung auf. Auf dieser Schrägfläche lagert sehr tief — infolge der Ausnehmung — eine entsprechend geformte Platte 130, welche der Aufnahme einer Schubrolle 131 dient. Diese kann bei entsprechender Breite der Antriebsvorrichtung 120 als Walze ausgebildet sein. Ein Schiebekeil 133 hat eine Keilschrägfläche 135, welche mit der Schubrolle 131 in Berührungsverbindung steht. Der Schiebekeil 133 ist mit einer Rückstellfeder 137 ausgerüstet, welche den Keil nach seinem Arbeitsgang in die Ausgangslage zurückdrückt.

Dem Schiebekeil 133 gegenüber liegt eine Schublagerplatte 140, welche auf zwei Rollen 141 und 142 bzw. Walzen verschiebbar gelagert und mit einer Rückstellfeder 144 versehen ist. Das Fördergut ist eine Stange 145 bzw. eine entsprechende Platte oder aber ganz allgemein zugfeste bzw. zugsteife Körper, wie Drähte, Seile, Folien und dgl.

Im Gegensatz zur Arbeitsweise der Antriebsvorrichtung gemäss Fig. 14 wird hier das Fördergut in Form der Stange 145 zangenartig vom Schiebekeil 133 auf der einen Seite und von der Schublagerplatte 140 auf der anderen Seite erfasst. Auf diese Weise wird die kraftschliessende Verschiebefläche der Antriebsvorrichtung entsprechend vergrössert. Diese Vorrichtung ist ganz besonders befähigt, Gegenstände, welche auf Druck nicht beanspruchbar sind, zu fördern bzw. sich längs diesen zu bewegen, wie dies bei Drähten, Seilen, Kabeln usw. der Fall ist. Die Keillagerung kann auch gemäss Fig. 14 ausgeführt sein.

Diese Vorrichtungen sind für beliebige Formen von Gut geeignet, welche in einer Dimension formsteif sind. Sie können auch als sog. Kletteraffen und dgl. verwendet werden.

Mit einer derartigen Vorrichtung ist es ferner möglich, eine elektrische Impulsform, z.B. rechteckig, sinusförmig usw., in eine entsprechende mechanische Impulsgebung umzuwandeln.

Anstelle von Wälzlagern können auch z.B. selbstschmierende Gleitlager verwendet werden.

Die Darstellungen von Fig. 14 und 15 zeigen Ausführungsbeispiele, bei denen durch Senkrechthebung zur Keilfläche der Krafterzeuger, diese grundsätzlich keine Scherbeanspruchung tragen müssen, weshalb sie auch die Anwendung von Rollmembranen oder anderen Krafterzeuger-Elementen mit geringerer Selbstführung ermöglichen.

### Patentansprüche

1. Druckmittelbetriebene Antriebsvorrichtung zur Erzeugung einer Relativbewegung in Form einer fortschreitenden, geradlinigen, ebenen oder räumlichen Schwenk- bzw. Drehbewegung eines angetriebenen Elementes (44, 45, 115, 145) mittels mindestens eines Hubelementes (13 bis 16; 40 bis 42; usw.), dadurch gekennzeichnet, dass zwischen dem Hubelement und dem angetriebenen Element mindestens ein Teilglied (17, 106, 133) angeordnet ist, welches unter dem Einfluss der Hubbewegungen des als aufblasbare Zelle (13, 14; 37, 38, 101, 128) ausgebildeten Hubelementes aufgrund einer durch Keilwirkung erzeugten Kraftkomponente und einer Rückstellkraft (45, 54, 56, 108, 137, 144) in der Bahn der Relativbewegung eine schrittweise hin- und hergehende Bewegung ausführt, wobei eine Vorbewegung des angetriebenen Elementes während des Arbeitshubs der Zelle dadurch erfolgt, dass das Keilglied beim Arbeitshub der Hubeinrichtung unter Reibschluss Kraft überträgt und beim Rückhub der Zelle unter Aufhebung des Reibschlusses eine relative Rückbewegung des Keilgliedes infolge der Rückstellkraft erfolgt.

2. Antriebsvorrichtung nach Anspruch 1, dadurch gekennzeichnet, dass mehrere, vorzugsweise federbelastete, Keile (52, 53) angeordnet sind, welche eine kontinuierliche Vorwärtsbewegung des angetriebenen Elementes (55) ermöglichen.

3. Antriebsvorrichtung nach Anspruch 1 oder 2, gekennzeichnet durch mindestens zwei simultan ansteuerbare Kraftzellen (13, 14), welche gemeinsam eine Antriebsplatte (15) bewegen.

4. Antriebsvorrichtung nach einem der Ansprüche 1 bis 3, gekennzeichnet durch einen schrittweise mit der Antriebsvorrichtung (41, 42) formschlüssig und mit einer Schubstange (44) oder einem feststehenden Teil reibungsschlüssig funktionsverbundenen und bewegten Keil (40) (Fig. 5, 6, 7, 9).

5. Antriebsvorrichtung nach einem der Ansprüche 1, 3 oder 4, gekennzeichnet durch mindestens einen symmetrisch ausgebildeten Keil (60), dessen Verschiebung eine Richtungsänderung des Schubes bewirkt (Fig. 7).

6. Antriebsvorrichtung nach Anspruch 1, dadurch gekennzeichnet, dass die Zelle (87) membran-oder balgartig ausgebildet ist (Fig. 12, 13).

7. Antriebsvorrichtung nach Anspruch 1, gekennzeichnet durch mindestens eine an der Zelle (13, 14) haftende und schwebende Druckplatte (15) Fig. 1).

8. Antriebsvorrichtung nach Anspruch 7, gekennzeichnet durch eine Antriebsrolle (16) an der schwebenden Druckplatte (15) (Fig. 1 bis 9).

9. Antriebsvorrichtung nach Anspruch 6, gekennzeichnet durch einen, mindestens zweischichtigen Membrananteil (Fig. 10).

10. Antriebsvorrichtung nach Anspruch 6 oder 7, gekennzeichnet durch eine in Längsrichtung diagonal kunststoffelastisch verstärkte Membran (Fig. 13).

11. Antriebsvorrichtung, vorzugsweise nach mindestens einem der vorhergehenden Ansprüche, dadurch gekennzeichnet, dass die Zelle eine parallel zur Keilfläche verlaufende Hubfläche aufweist, um eine zur Keilfläche rechtwinklig stehende Hubkraft zu erzeugen (Fig. 14, 15).

**Claims**

1. Driving arrangement which is driven by pressure means to produce a relative movement in the form of a progressive, straight-lined, two-dimensional or three-dimensional pivoting or rotary movement of a driven element (44, 45, 115, 145) by means of at least one lifting element (13 to 16; 40 to 42; etc.), characterized in that between the lifting element and the driven element at least one sub-member (17, 106, 133) is arranged, which under the effect of the lifting movements of the lifting element, which is constructed as an inflatable cell (13, 14; 37, 38; 101, 128); due to a force component produced through a wedge effect and due to a restoring force (45, 54, 56, 108, 127, 144) in the path of the relative movement performs a reciprocating movement by steps, whereby a preliminary movement of the driven element takes place during the working stroke of the cell in that the wedge member transfers force on the working stroke of the lifting device under friction contact and on the return stroke of the cell, with removal of the friction contact, a relative return movement of the wedge member takes place as a result of the restoring force.

2. Driving arrangement according to Claim 1, characterized in that several, preferably springloaded, wedges (52, 53) are arranged, which make possible a continuous forward movement of the driven element (55).

3. Driving arrangement according to Claim 1 or 2, characterized by at least two power cells (13, 14) which are able to be controlled simultaneously, and which together move a driving plate (15).

4. Driving arrangement according to one of Claims 1 to 3, characterized by a wedge (40), moving and functionally connected in steps with the driving arrangement (41, 42) so as to lock with a wedging action, and in friction contact with a thrust rod (44) or with a fixed part (Fig. 5, 6, 7, 9).

5. Driving arrangement according to one of Claims 1, 3 or 4, characterized by at least one symmetrically constructed wedge (60), the displacement of which causes a change of direction of the thrust (Fig. 7).

6. Driving arrangement according to Claim 1, characterized in that the cell (87) is constructed in the manner of a membrane or bellows (Fig. 12, 13).

7. Driving arrangement according to Claim 1, characterized by at least one pressure plate (15) adhering to and suspended on the cell (13, 14) (Fig. 1).

8. Driving arrangement according to Claim 7, characterized by a driving roller (16) on the suspended pressure plate (15) (Fig. 1 to 9).

9. Driving arrangement according to Claim 6, characterized by a membrane component which has at least two layers (Fig. 10).

10. Driving arrangement according to Claim 6 or 7, characterized by a membrane which is reinforced elastically with synthetic material diagonally in the longitudinal direction (Fig. 13).

11. Driving arrangement, preferably according to at least one of the preceding claims, characterized in that the cell has a lifting surface running parallel to the wedge surface, in order to produce a lifting force at right-angles to the wedge surface (Fig. 14, 15).

**Revendications**

1. Mécanisme moteur mis en action par un fluide sous pression, pour animer un élément mené (44, 45, 115, 145) d'un mouvement relatif sous la forme d'un mouvement de pivotement ou de rotation progressif et rectiligne, dans un plan ou dans l'espace, au moyen d'au moins un organe de levage (13 à 16; 40 à 42; etc.), caractérisé en ce que, entre l'organe de levage et l'élément mené, est disposé au moins une pièce en forme de coin (17, 106, 133) qui, par suite des mouvements ascendants de l'organe de levage, réalisé sous la forme d'une cellule gonflable (13, 14; 37, 38; 101, 128), et sous l'effet d'une composante de force produite par l'effet de coin et d'une force de rappel (45, 54, 56, 108, 137, 144), exécute un mouvement de va-et-vient graduel dans la trajectoire du mouvement relatif, ce dont il résulte que l'élément mené effectue, pendant la course active de la cellule, un mouvement d'avance par le fait que la pièce en forme de coin transmet par friction une force lors de la course active de l'organe de levage et que, lors de la course de retour de la cellule, un mouvement de retour relatif de la pièce en forme de coin a lieu, après suppression du contact de friction, sous l'effet de la force de rappel.

2. Mécanisme moteur selon la revendication 1, caractérisé en ce qu'il comprend plusieurs coins (52, 53), de préférence sollicités par ressort, qui rendent possible un mouvement continu vers l'avant de l'élément mené (55).

3. Mécanisme moteur selon la revendication 1 ou 2, caractérisé par au moins deux cellules dynamiques (13, 14) aptes à être actionnées simultanément et qui déplacent ensemble une plaque d'entraînement (15).

4. Mécanisme moteur selon l'une des revendications 1 à 3, caractérisé par un coin (40) déplacé graduellement et accouplé fonctionnellement au mécanisme moteur (41, 42), par une liaison mécanique, et à une tige-poussoir (44) ou à un élément immobile, par une liaison par friction (figures 5, 6, 7, 9).

5. Mécanisme moteur selon l'une des revendications 1, 3 ou 4, caractérisé par au moins un coin (60) réalisé sous une forme symétrique, dont le coulissement provoque un changement de sens de la poussée (figure 7).

6. Mécanisme moteur selon la revendication 1, caractérisé en ce que la cellule (87) est réalisée sous la forme d'une membrane ou d'un soufflet (figures 12, 13).

7. Mécanisme moteur selon la revendication 1, caractérisé par au moins une plaque de poussée flottante (15), adhérant à la cellule (13, 14) (figure 1).

8. Mécanisme moteur selon la revendication 7, caractérisé par un rouleau d'entraînement (16) monté sur la plaque de poussée flottante (15) (figures 1 à 9).

9. Mécanisme moteur selon la revendication 6, caractérisé par une portion de membrane formée d'au moins deux couches (figure 10).

10. Mécanisme moteur selon la revendication 6 ou 7, caractérisé par une membrane renforcée dans la direction longitudinale et en diagonale par une matière synthétique élastique (figure 13).

11. Mécanisme moteur, de préférence selon l'une au moins des revendications précédentes, caractérisé en ce que la cellule présente une surface de levage s'étendant parallèlement à la surface du coin, pour engendrer une force de levage dirigée perpendiculairement à la surface du coin.

FIG. 1

FIG. 3

FIG. 2

FIG. 4

FIG. 5

FIG. 6

FIG. 7

FIG. 8

FIG. 9

80

78

79

76

77

74

75

73

FIG. 10

82

FIG. 11

85

FIG. 12

86

88

89

87

92

90

93

91

FIG. 13

FIG.14